# EUROPEAN PATENT SPECIFICATION

(11) **EP 3 800 634 B1**
(45) Date of publication and mention of the grant of the patent: **08.11.2023**
(21) Application number: 20198311.1
(22) Date of filing: 25.09.2020
(51) Int. Cl.: G10L 15/22, G06F 3/16, B60R 16/037, G06F 16/9032, G10L 15/26, G11B 27/10

(54) **INTELLIGENT RECORDING AND ACTION SYSTEM AND METHOD**
INTELLIGENTES AUFZEICHNUNGS- UND AKTIONSSYSTEM UND VERFAHREN
SYSTÈME INTELLIGENT D'ENREGISTREMENT ET D'ACTION ET PROCÉDÉ

(30) Priority: 01.10.2019 US 201916589267
(43) Date of publication of application: 07.04.2021
(73) Proprietor: BlackBerry Limited, Waterloo, Ontario N2K 0A7 (CA)
(72) Inventor: LAYTON, Leonard, Charles, Waterloo, Ontario N2K 0A7 (CA)
(74) Representative: MERH-IP Matias Erny Reichl Hoffmann Patentanwälte PartG mbB

(56) References cited:
- KR-A- 20180 106 817
- US-A1- 2016 019 892
- US-A1- 2019 206 392

## Description

### FIELD

The present application generally relates to data extraction from audio content, and more particularly, to methods and systems for acting upon data extracted from audio content.

### BACKGROUND

Many jurisdictions have started outlawing the use of mobile or handheld devices while driving for safety reasons. It follows that even using a fixed in-dash vehicle information and entertainment system can be unsafe as it will invariably result in distracted driving. In fact, studies have shown that distracted driving may be more dangerous than driving while intoxicated.

Oftentimes a driver will hear something of interest in audio being broadcast in their vehicle, such as a catchy song, phone number, or website address. If the driver wishes to take action on the item of interest, he or she has no choice but to try to remember it for later (when parked) or risk acting on it while driving.

US 2019/0206392 A1 relates to methods and systems for recognizing audio played in order to instruct a media player to record related video. US 2016/0019892 A1 concerns a procedure to automate internet search based on audio content from a vehicle radio. KR 20180106817 A describes an artificial intelligence (AI) system using a machine learning algorithm, and an application thereof.

### BRIEF DESCRIPTION OF THE DRAWINGS

Reference will now be made, by way of example, to the accompanying drawings which show example embodiments of the present application, and in which:
FIG. 1 shows, in flowchart form, an example method of initiating action based on content played by a vehicle infotainment system in a vehicle.
FIG. 2 illustrates an example use-case scenario of an example method of initiating action based on content played by a vehicle infotainment system in a vehicle.
FIG. 3 shows, in flowchart form, an example method of initiating an action based on audio content.
FIG. 4 depicts, in block diagram form, an example intelligent recording and action system (IRAS) for initiating action based on content played by a vehicle infotainment system in a vehicle.
FIG. 5 depicts, in block diagram form, an example system architecture for implementing the IRAS of FIG. 4 in a vehicle.

Similar reference numerals may have been used in different figures to denote similar components.

### DESCRIPTION OF EXAMPLE EMBODIMENTS

In a first aspect, the present application describes a method in accordance with annexed claim 1.

In some implementations, the method of initiating action based on content played by a vehicle infotainment system in a vehicle may include continuously monitoring speech in the vehicle by the at least one microphone.

In one aspect, detecting a voice command in an audio signal received by the at least one microphone may include recognizing a trigger, the trigger being a spoken wake-up phrase or a button activation.

In some implementations, determining that the voice command relates to audio content output by the vehicle infotainment system may include parsing the voice command to interpret the command.

In other implementations, determining that the voice command relates to audio content output by the vehicle infotainment system may further include matching the interpreted voice command with one or more commands from a command set.

In some implementations, the extracted data may be one or more of: a phone number, an address, an audio clip, metadata regarding audio content, a URL, event information, an email address, or a search term.

In other implementations, initiating an action may include one or more of: transferring the phone number to a dialer application, transferring the phone number to a messaging application, transferring the address to a mapping/navigation application, transferring the audio clip to a database application, transferring the metadata to a database application, transferring the URL to a browser application, transferring the event information to a calendar application, transferring the email address to a mail application, or transferring the search term to a search engine.

In a second aspect, the present application describes an intelligent recording and action system (IRAS) in accordance with the annexed independent IRAS claim.

In some implementations, the at least one microphone continuously monitors speech in the vehicle.

In one aspect, detecting a received voice command in an audio signal by the at least one microphone may include recognizing a trigger, the trigger being a spoken wake-up phrase or a button activation.

In some implementations, determining that the voice command relates to audio content output by the vehicle infotainment system may include parsing the voice command to interpret the command.

In other implementations, determining that the voice command relates to audio content output by the vehicle infotainment system may further include matching the interpreted voice command with one or more commands from a command set.

In some implementations, the extracted data may be one or more of: a phone number, an address, an audio clip, metadata regarding audio content, a URL, event information, an email address, or a search term.

In other implementations, initiating an action may include one or more of: transferring the phone number to a dialer application, transferring the phone number to a messaging application, transferring the address to a mapping/navigation application, transferring the audio clip to a database application, transferring the metadata to a database application, transferring the URL to a browser application, transferring the event information to a calendar application, transferring the email address to a mail application, or transferring the search term to a search engine.

In yet a further aspect, the present application describes a non-transitory computer-readable storage medium in accordance with the annexed independent non-transitory computer-readable storage medium claim.

Other aspects and features of the present application will be understood by those of ordinary skill in the art from a review of the following description of examples in conjunction with the accompanying figures.

In the present application, the terms "about", "approximately", and "substantially" are meant to cover variations that may exist in the upper and lower limits of the ranges of values, such as variations in properties, parameters, and dimensions. In a non-limiting example, the terms "about", "approximately", and "substantially" may mean plus or minus 10 percent or less.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of ...or..." is intended to cover any one or more of the listed elements, including any one of the listed elements alone, any sub-combination, or all of the elements, without necessarily excluding any additional elements, and without necessarily requiring all of the elements.

As noted above, while driving and listening to the audio system in their vehicle, valuable information (e.g. phone number, address) is often provided in the audio content, but it is difficult or dangerous for the driver to act upon the information. It remains a challenge today to safely (i.e. in a handsfree manner) initiate action on information heard in an audio broadcast while driving a vehicle.

Accordingly, in accordance with one aspect of the present application, a method of initiating action based on content played by a vehicle infotainment system in a vehicle is described. The method, in one example implementation, allows a user to take specific actions based on content recently played on the vehicle's infotainment system. It does so by recording (buffering) recently played audio content, detecting a voice command, determining that the voice command relates to the audio content, extracting data relating to the voice command from the recorded (buffered) audio content, and initiating the specific action.

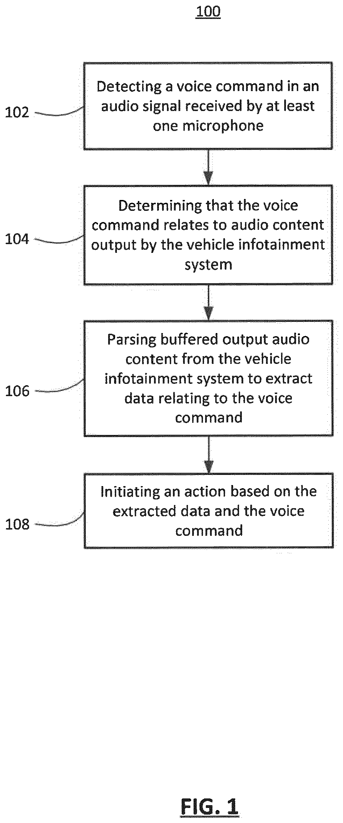

Reference is first made to FIG. 1, which shows an example method 100 of initiating action based on content played by a vehicle infotainment system in a vehicle. The method 100 may be carried out by a software application or module within a vehicle infotainment system, or by an independent stand-alone system, for example.

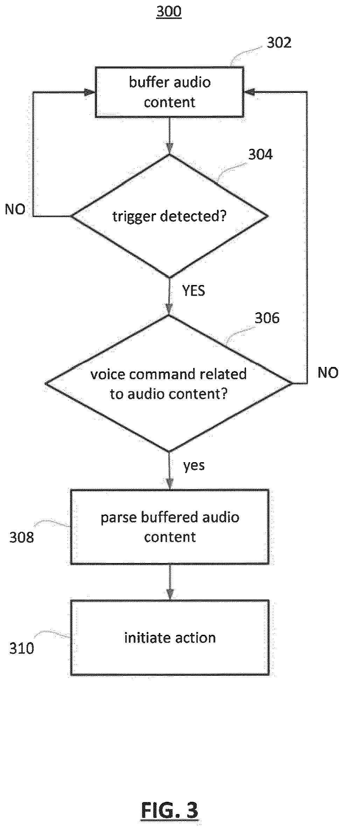

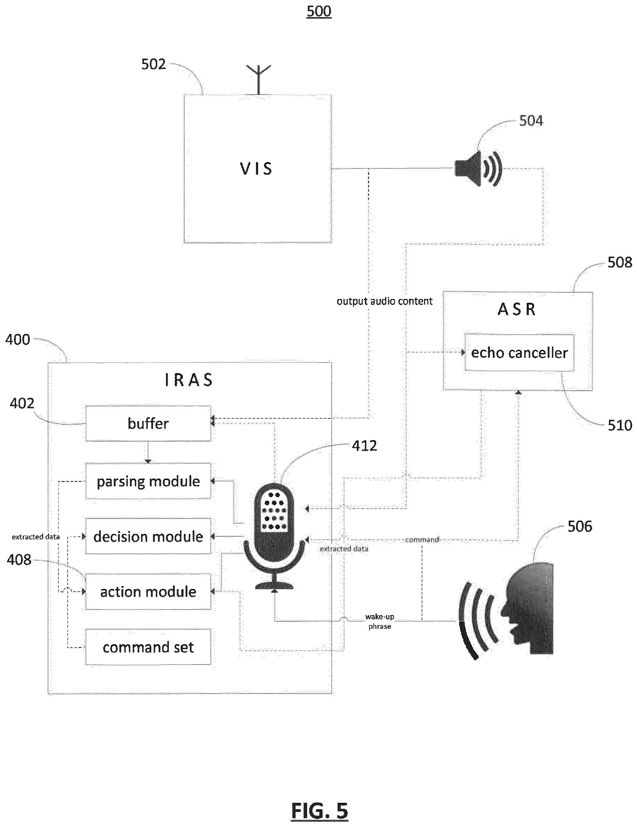

At operation 102, the method detects a voice command in an audio signal received by at least one microphone. The voice command may be spoken by the driver or by another occupant of the vehicle and its corresponding audio signal is picked up by one or more microphones. In an example embodiment, the at least one microphone continuously monitors speech in the vehicle, thereby providing an "always-on" environment. In such a state it is important that command terms not be erroneously picked up from the audio content played by the vehicle infotainment system. Further details are provided below in relation to FIG. 5. The detecting a voice command operation may include recognizing a trigger. That is, the driver or occupant may provide a trigger to indicate that they will subsequently be issuing a voice command. In one example embodiment, the trigger is a spoken wake-up phrase. In a further example embodiment, the trigger is a button activation. In either case, an audible beep or tone may be played/heard to confirm receipt of the trigger and prompt the voice command. Further details regarding these example embodiments are discussed below in relation to FIGS. 3-5.

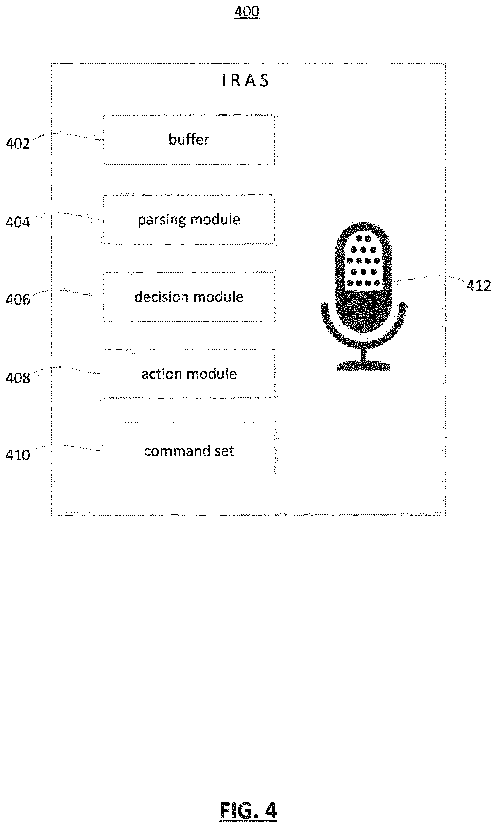

At operation 104, the method determines that the voice command relates to audio content output by the vehicle infotainment system. In an example embodiment, determining that the voice command relates to audio content output by the vehicle infotainment system includes parsing the voice command to interpret the command. Such parsing may be according to various syntactic analysis techniques, and may be executed either locally or remotely (see description of FIG. 5). In a further example embodiment, discussed below in relation to FIG. 4, determining that the voice command relates to audio content output by the vehicle infotainment system includes matching the interpreted voice command with one or more commands from a command set.

At operation 106, the method parses buffered output audio content from the vehicle infotainment system to extract data relating to the voice command. Put another way, the audio content is parsed to only extract "actionable" data, *i.e.* data that can be acted upon in accordance with a voice command. As mentioned above, parsing may be executed locally in one of the vehicle's systems, or by a remote system, or some combination of the two. In accordance with the invention, parsing buffered output audio content from the vehicle infotainment system to extract data relating to the voice command includes transcribing the buffered output audio content and searching the transcribed buffered output audio content for data relating to the voice command.

At operation 108, the method initiates an action based on the extracted data and the voice command. In an example embodiment, the extracted data is one or more of: a phone number, an address, an audio clip, metadata regarding audio content, a URL, event information, an email address, or a search term. In a further example embodiment, initiating an action includes one or more of: transferring the phone number to a dialer application, transferring the phone number to a messaging application, transferring the address to a mapping/navigation application, transferring the audio clip to a database application, transferring the metadata to a database application, transferring the URL to a browser application, transferring the event information to a calendar application, transferring the email address to a mail application, or transferring the search term to a search engine. It may be that initiating an action at operation 108 includes transferring extracted data to another application/system (e.g. vehicle dialer). Alternatively, it may be that initiating an action at operation 108 includes both transferring plus initiating execution of the action (e.g. placing a call).

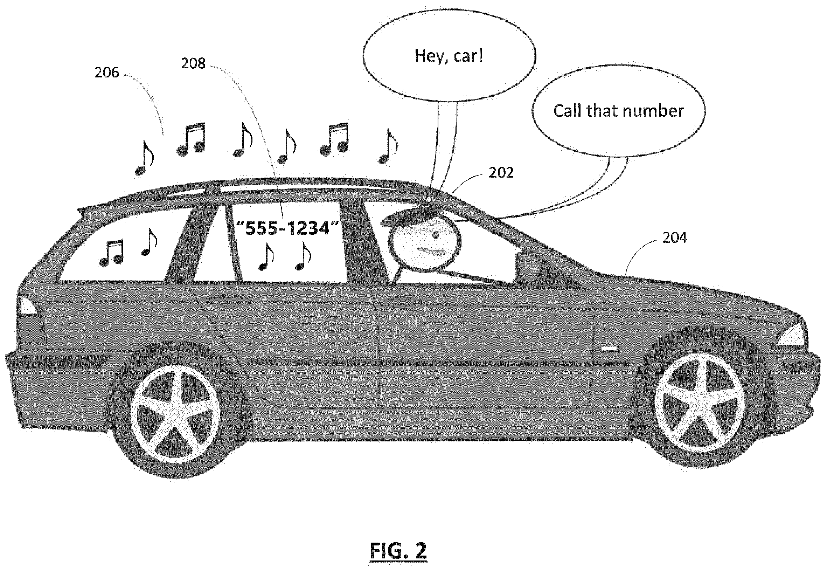

Reference is now made to FIG. 2, which illustrates an example use-case scenario of an example method of initiating action based on content played by a vehicle infotainment system in a vehicle. In the scenario a driver 202 is driving his or her vehicle 204 while listening to a radio station. In between songs 206 an advertisement plays for a product being offered by a local business. At the conclusion of the radio commercial a phone number 208 for the business is announced. The driver 202 is interested in the product offering and, after a few moments, decides that he or she would like to call the local business to inquire about the product. The driver 202 proceeds to trigger the intelligent recording and action system (IRAS) in the vehicle 204 by speaking the trigger wake-up phrase "Hey, car!". An audible beep or tone is played by the IRAS through the connected infotainment system to prompt a voice command from the driver 202. The driver 202 then speaks the command "Call that number" which is detected by the IRAS. After determining that, indeed, there is a phone number in the recently played (and buffered) advertisement, the IRAS transfers the phone number to the vehicle 204 dialing system and the call is placed to the phone number.

Reference is now made to FIG. 3, which shows an example method 300 of initiating an action based on audio content. The method 300 may be implemented in a vehicle having a vehicle infotainment system. At operation 302, output audio content from the vehicle infotainment system is buffered. At operation 304, the system determines whether a trigger is detected or not. In one example embodiment, the trigger is a spoken wake-up phrase which may, for example, be recognized by means of the at least one microphone. In another example embodiment, the trigger is a button activation which button may, for example, be a constituent of the IRAS itself or may be part of a separate vehicle system, such as the infotainment system. If the trigger button is not a part of the IRAS, the button may be connected to the IRAS by suitable means. If a trigger is not detected, then the method 300 returns to buffering output audio content. If a trigger is detected, then in operation 306 the voice command relates to (buffered) output audio content from the vehicle infotainment system or not. For example, the voice command may be a command to dial a number, navigate to an address, execute an Internet search of a term, etc. If the voice command does not relate to audio content, then the method 300 returns to buffering output audio content. In this case the user may hear some sort of alert notifying that nothing relevant was found or may simply get no response. If the voice command relates to audio content, then the system parses the buffered output audio content at operation 308 to extract data relating to the voice command. After parsing the buffered audio content, the system initiates action based on the extracted data and the voice command at operation 310. For example, the initiated action may be transferring a phone number to a dialer application, transferring an address to a navigation application, transferring a search term to a search engine, etc.

Reference is now made to FIG. 4, which depicts, in block diagram form, an example intelligent recording and action system (IRAS) 400 for initiating action based on content played by a vehicle infotainment system in a vehicle. A buffer 402 is included for storing a portion of recent audio content output by the vehicle infotainment system. The length of the buffer 402 may, for example, be user-selectable so as to allow a user to set how many seconds of recent audio content should be saved. As discussed previously, in some embodiments at least one microphone 412 continuously monitors speech in the vehicle, thus the buffer 402 may be constantly written to and the contents of the buffer 402 may be constantly overwritten by the latest audio content. Further, the buffer 402 may receive audio content via a direct connection with the infotainment system or, alternatively, via the at least one microphone 412. The at least one microphone 412 may consist of a single microphone for detecting voice commands and, optionally, for listening to output audio content. It may also be that multiple microphones are included, such as, for example, one microphone for detecting voice commands and one other microphone for monitoring output audio content/feeding the buffer 402. The other microphone monitoring audio may be part of the IRAS 400 or, alternatively, it may be part of a separate vehicle system and connected to the IRAS 400. A parsing module 404 parses buffered output audio content from the vehicle infotainment system to extract data relating to the voice command. In one embodiment the parsing module 404 is responsible for parsing a detected voice command in order to interpret the command. In accordance with the invention the parsing module 404 is responsible for parsing buffered output audio content from the vehicle infotainment system to extract data relating to the voice command. Some examples of extracted data include: a phone number, an address, an audio clip, metadata regarding audio content, a URL, event information, an email address, or a search term. Any of a number of known syntactic analysis techniques may be utilized by the parsing module 404. The parsing of buffered output audio content includes transcribing the buffered output audio content and searching the transcribed buffered output audio content for data relating to the voice command. A decision module 406 determines whether the voice command relates to audio content output by the vehicle infotainment system. This determination may be based on a correlation between the detected voice command and a command set 410 where determining that the voice command relates to output audio content includes matching the interpreted voice command with one or more commands from the command set 410. The command set 410 may include one or more commonly used pre-set commands, and may, for example, be added to or changed by the user. Additionally, or alternatively, the decision module 406 may make its determination based on other criteria such as, for example, AI-based processing. Finally, an action module 408 is included in IRAS 400 for initiating an action based on the data extracted by parsing module 404 and the voice command detected by the at least one microphone 412. Some examples of actions initiated by the action module 408 include: transferring the phone number to a dialer application, transferring the phone number to a messaging application, transferring the address to a mapping/navigation application, transferring the audio clip to a database application, transferring the metadata to a database application, transferring the URL to a browser application, transferring the event information to a calendar application, transferring the email address to a mail application, or transferring the search term to a search engine.

Reference is now made to FIG. 5, which depicts an example system architecture for implementing the IRAS 400 of FIG. 4 in a vehicle. As shown, a vehicle infotainment system (VIS) 502 provides the functionality of an audio system in the vehicle. The VIS 502 outputs audio in the cabin of the vehicle via one or more speakers 504. Various sources of audio content may be used by the VIS 502 including, for example, CD/DVD, USB, cellular data connection, satellite radio, and terrestrial radio (the AM/FM antenna is depicted). As described above, the IRAS 400 buffer 402 may record output audio content received directly from the VIS 502 or it may record output audio content via the at least one microphone 412. If the buffer 402 records output audio content via the at least one microphone 412, then according to one embodiment the at least one microphone 412 continuously monitors speech in the vehicle. As noted previously, the at least one microphone 412 includes a microphone for detecting voice commands from a user 506 and may include additional microphone(s) for picking up audio content. Each of the at least one microphone(s) 412 may be part of the IRAS 400, be part of the VIS 502, or be distributed in any combination between any of the vehicle systems. As shown, the decision module 406 receives the voice command (in this example directly via the at least one microphone 412), as well as the commands from the command set 410, in order to determine if the voice command relates to output audio content. Also shown is the action module 408 receiving extracted (*i.e.* actionable) data from the parsing module 404, upon which it initiates an action based on the voice command.

FIG. 5 further depicts an Automatic Speech Recognition (ASR) module 508. The embodiments discussed above relating to continuous monitoring of speech in the vehicle may be accomplished by means of ASR 508. In one embodiment, the ASR 508 parses speech (*i.e.* voice command) following detection of a trigger and determination of its relevance, and sends interpreted commands from the speech to the action module 408. In a further embodiment, it is the ASR 508 which extracts data from the output audio content received from the VIS 502, in which case the action module 408 receives the actionable data from the ASR 508. The ASR 508 may also include an echo canceller 510, the purpose of which is to remove output audio content from the signal picked up by the at least one microphone 412 so that the speech system (i.e. IRAS 400) is not erroneously woken up by audio content. It may be that both ASR 508 and echo canceller 510 functionality is internal to IRAS 400, or alternatively, external to IRAS 400 (as depicted). It may also be that the ASR 508 is local in either the IRAS 400 or embedded in VIS 502, and/or remote. Put another way, ASR 508 may be implemented in a "hybrid" fashion with some processing occurring locally in the vehicle but much of the processing occurring in a remote computer system.

Example embodiments of the present application are not limited to any particular operating system, system architecture, mobile device architecture, server architecture, or computer programming language.

It will be understood that the applications, modules, routines, processes, threads, or other software components implementing the described method/process may be realized using standard computer programming techniques and languages. The present application is not limited to particular processors, computer languages, computer programming conventions, data structures, or other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

## Claims

1. A method of initiating action based on content played by a vehicle infotainment system (502) in a vehicle (204), the method comprising:
detecting (102) a voice command in an audio signal received by at least one microphone (412);
determining (104) that the voice command relates to audio content output by the vehicle infotainment system (502) and, based on that determination (104),
parsing (106) buffered output audio content from the vehicle infotainment system (502) to extract, from the buffered output audio content, data relating to the voice command, wherein parsing (106) buffered output audio content from the vehicle infotainment system (502) to extract, from the buffered output audio content, data relating to the voice command includes transcribing the buffered output audio content and searching the transcribed buffered output audio content for actionable data relating to the voice command, wherein actionable data is data that can be acted upon in accordance with the voice command; and
initiating (108) an action based on the extracted actionable data and the voice command.

2. The method of claim 1, further comprising continuously monitoring speech in the vehicle (204) by the at least one microphone (412).

3. The method of claim 2, wherein detecting a voice command in an audio signal received by the at least one microphone (412) includes recognizing a trigger, and wherein the trigger is a spoken wake-up phrase.

4. The method of any previous claim, wherein detecting a voice command in an audio signal received by the at least one microphone (412) includes recognizing a trigger, and wherein the trigger is a button activation.

5. The method of any previous claim, wherein determining that the voice command relates to audio content output by the vehicle infotainment system (502) includes parsing the voice command to interpret the command.

6. The method of claim 5, wherein determining that the voice command relates to audio content output by the vehicle infotainment system (502) further includes matching the interpreted voice command with one or more commands from a command set.

7. The method of any previous claim, wherein the extracted actionable data is one or more of: a phone number, an address, an audio clip, metadata regarding audio content, a URL, event information, an email address, or a search term.

8. The method of claim 7, wherein initiating an action includes one or more of: transferring the phone number to a dialer application, transferring the phone number to a messaging application, transferring the address to a mapping/navigation application, transferring the audio clip to a database application, transferring the metadata to a database application, transferring the URL to a browser application, transferring the event information to a calendar application, transferring the email address to a mail application, or transferring the search term to a search engine.

9. An intelligent recording and action system, IRAS, for initiating action based on content played by a vehicle infotainment system (502) in a vehicle (204), the system comprising:
at least one microphone (412) for detecting (102) a received voice command in an audio signal;
a module for determining (104) that the voice command relates to audio content output by the vehicle infotainment system (502);
a module (404) for parsing (106) buffered output audio content from the vehicle infotainment system (502) to extract, from the buffered output audio content, data relating to the voice command, wherein parsing (106) buffered output audio content from the vehicle infotainment system (502) to extract, from the buffered output audio content, data relating to the voice command includes transcribing the buffered output audio content and searching the transcribed buffered output audio content for actionable data relating to the voice command wherein actionable data is data that can be acted upon in accordance with the voice command; and
a module (408) for initiating (108) an action based on the extracted actionable data and the voice command.

10. The system of claim 9, wherein the at least one microphone (412) continuously monitors speech in the vehicle (204).

11. The system of claim 9 or 10, wherein detecting a received voice command in an audio signal by the at least one microphone (412) includes recognizing a trigger, and wherein the trigger is a button activation.

12. The system of any of claims 9 to 11, wherein determining that the voice command relates to audio content output by the vehicle infotainment system (502) includes parsing the voice command to interpret the command.

13. The system of any of claims 9 to 12, wherein initiating (108) an action includes one or more of: transferring a phone number to a dialer application, transferring a phone number to a messaging application, transferring an address to a mapping/navigation application, transferring an audio clip to a database application, transferring metadata to a database application, transferring an URL to a browser application, transferring an event information to a calendar application, transferring an email address to a mail application, or transferring a search term to a search engine.

14. A non-transitory computer-readable storage medium storing processor-executable instructions to initiate action based on content played by a vehicle infotainment system (502) in a vehicle (204), wherein the processor-executable instructions, when executed by a processor, cause the processor to perform the method of any of claims 1 to 8.

## Patentansprüche

1. Verfahren zum Initiieren von Aktion basierend auf Inhalt, der durch ein Fahrzeug-Infotainmentsystem (502) in einem Fahrzeug (204) abgespielt wird, das Verfahren umfassend:
Erkennen (102) eines Sprachbefehls in einem Audiosignal, das durch zumindest ein Mikrofon (412) empfangen wird;
Bestimmen (104), dass sich der Sprachbefehl auf Audioinhalt bezieht, der durch das Fahrzeug-Infotainmentsystem (502) ausgegeben wird, und, basierend auf dieser Bestimmung (104),
Parsen (106) von gepuffertem ausgegebenen Audioinhalt aus dem Fahrzeug-Infotainmentsystem (502) zum Extrahieren, aus dem gepufferten ausgegebenen Audioinhalt, von Daten, die sich auf den Sprachbefehl beziehen, wobei Parsen (106) von gepuffertem ausgegebenen Audioinhalt aus dem Fahrzeug-Infotainmentsystem (502) zum Extrahieren, aus dem gepufferten ausgegebenen Audioinhalt, von Daten, die sich auf den Sprachbefehl beziehen, Transkribieren des gepufferten ausgegebenen Audioinhalts und Durchsuchen des transkribierten gepufferten ausgegebenen Audioinhalts nach umsetzbaren Daten beinhaltet, die sich auf den Sprachbefehl beziehen, wobei umsetzbare Daten Daten sind, auf die gemäß dem Sprachbefehl eingewirkt werden kann; und
Initiieren (108) einer Aktion basierend auf den extrahierten umsetzbaren Daten und dem Sprachbefehl.

2. Verfahren nach Anspruch 1, ferner umfassend fortlaufendes Überwachen von Sprache im Fahrzeug (204) durch das zumindest eine Mikrofon (412).

3. Verfahren nach Anspruch 2, wobei Erkennen eines Sprachbefehls in einem Audiosignal, das durch das zumindest eine Mikrofon (412) empfangen wird, Erkennen eines Auslösers beinhaltet, und wobei der Auslöser eine gesprochene Aufweckformulierung ist.

4. Verfahren nach einem der vorhergehenden Ansprüche, wobei Erkennen eines Sprachbefehls in einem Audiosignal, das durch das zumindest eine Mikrofon (412) empfangen wird, Erkennen eines Auslösers beinhaltet, und wobei der Auslöser eine Knopfaktivierung ist.

5. Verfahren nach einem der vorhergehenden Ansprüche, wobei Bestimmen, dass sich der Sprachbefehl auf Audioinhalt bezieht, der durch das Fahrzeug-Infotainmentsystem (502) ausgegeben wird, Parsen des Sprachbefehls zum Interpretieren des Befehls beinhaltet.

6. Verfahren nach Anspruch 5, wobei Bestimmen, dass sich der Sprachbefehl auf Audioinhalt bezieht, der durch das Fahrzeug-Infotainmentsystem (502) ausgegeben wird, ferner Abstimmen des interpretierten Sprachbefehls mit einem oder mehr Befehlen aus einem Befehlssatz beinhaltet.

7. Verfahren nach einem der vorhergehenden Ansprüche, wobei die extrahierten umsetzbaren Daten eines oder mehr von Folgendem sind: eine Telefonnummer, eine Adresse, ein Audioclip, Metadaten bezüglich Audioinhalt, eine URL, Ereignisinformation, eine E-Mail-Adresse oder ein Suchbegriff.

8. Verfahren nach Anspruch 7, wobei Initiieren einer Aktion eines oder mehr von Folgendem beinhaltet: Übertragen der Telefonnummer an eine Wählanwendung, Übertragen der Telefonnummer an eine Messaging-Anwendung, Übertragen der Adresse an eine Mapping-/Navigationsanwendung, Übertragen des Audioclips an eine Datenbankanwendung, Übertragen der Metadaten an eine Datenbankanwendung, Übertragen der URL an eine Browseranwendung, Übertragen der Ereignisinformation an eine Kalenderanwendung, Übertragen der E-Mail-Adresse an eine Mailanwendung oder Übertragen des Suchbegriffs an eine Suchmaschine.

9. Intelligentes Aufzeichnungs- und Aktionssystem, IRAS, zum Initiieren von Aktion basierend auf Inhalt, der durch ein Fahrzeug-Infotainmentsystem (502) in einem Fahrzeug (204) abgespielt wird, das System umfassend:
zumindest ein Mikrofon (412) zum Erkennen (102) eines empfangenen Sprachbefehls in einem Audiosignal;
ein Modul zum Bestimmen (104), dass sich der Sprachbefehl auf Audioinhalt bezieht, der durch das Fahrzeug-Infotainmentsystem (502) ausgegeben wird;
ein Modul (404) zum Parsen (106) von gepuffertem ausgegebenen Audioinhalt aus dem Fahrzeug-Infotainmentsystem (502) zum Extrahieren, aus dem gepufferten ausgegebenen Audioinhalt, von Daten, die sich auf den Sprachbefehl beziehen, wobei Parsen (106) von gepuffertem ausgegebenen Audioinhalt aus dem Fahrzeug-Infotainmentsystem (502) zum Extrahieren, aus dem gepufferten ausgegebenen Audioinhalt, von Daten, die sich auf den Sprachbefehl beziehen, Transkribieren des gepufferten ausgegebenen Audioinhalts und Durchsuchen des transkribierten gepufferten ausgegebenen Audioinhalts nach umsetzbaren Daten beinhaltet, die sich auf den Sprachbefehl beziehen, wobei umsetzbare Daten Daten sind, auf die gemäß dem Sprachbefehl eingewirkt werden kann; und
ein Modul (408) zum Initiieren (108) einer Aktion basierend auf den extrahierten umsetzbaren Daten und dem Sprachbefehl.

10. System nach Anspruch 9, wobei das zumindest eine Mikrofon (412) Sprache im Fahrzeug (204) fortlaufend überwacht.

11. System nach Anspruch 9 oder 10, wobei Erkennen eines Sprachbefehls in einem Audiosignal durch das zumindest eine Mikrofon (412) Erkennen eines Auslösers beinhaltet, und wobei der Auslöser eine Knopfaktivierung ist.

12. System nach einem der Ansprüche 9 bis 11, wobei Bestimmen, dass sich der Sprachbefehl auf Audioinhalt bezieht, der durch das Fahrzeug-Infotainmentsystem (502) ausgegeben wird, Parsen des Sprachbefehls zum Interpretieren des Befehls beinhaltet.

13. System nach einem der Ansprüche 9 bis 12, wobei Initiieren (108) einer Aktion eines oder mehr von Folgendem beinhaltet: Übertragen einer Telefonnummer an eine Wählanwendung, Übertragen einer Telefonnummer an eine Messaging-Anwendung, Übertragen einer Adresse an eine Mapping-/Navigationsanwendung, Übertragen eines Audioclips an eine Datenbankanwendung, Übertragen von Metadaten an eine Datenbankanwendung, Übertragen einer URL an eine Browseranwendung, Übertragen einer Ereignisinformation an eine Kalenderanwendung, Übertragen einer E-Mail-Adresse an eine Mailanwendung oder Übertragen eines Suchbegriffs an eine Suchmaschine.

14. Nichtflüchtiges computerlesbares Speichermedium, das prozessorausführbare Anweisungen zum Initiieren von Aktion basierend auf Inhalt, der durch ein Fahrzeug-Infotainmentsystem (502) in einem Fahrzeug (204) abgespielt wird, speichert, wobei die prozessorausführbaren Anweisungen, wenn sie durch einen Prozessor ausgeführt werden, den Prozessor zum Ausführen des Verfahrens nach einem der Ansprüche 1 bis 8 veranlassen.

## Revendications

1. Procédé de déclenchement d'une action basée sur un contenu lu par un système d'infodivertissement de véhicule (502) dans un véhicule (204), le procédé comprenant de :
détecter (102) une commande vocale dans un signal audio reçu par au moins un microphone (412);
déterminer (104) que la commande vocale se rapporte au contenu audio émis par le système d'infodivertissement du véhicule (502) et, sur la base de cette détermination (104),
analyser (106) le contenu audio de sortie mis en mémoire tampon du système d'infodivertissement du véhicule (502) pour extraire, à partir du contenu audio de sortie mis en mémoire tampon, des données relatives à la commande vocale, dans lequel l'analyse (106) du contenu audio de sortie mis en mémoire tampon du système d'infodivertissement de véhicule (502) pour extraire, à partir du contenu audio de sortie mis en mémoire tampon, des données relatives à la commande vocale comprend la transcription du contenu audio de sortie mis en mémoire tampon et la recherche du contenu audio de sortie mis en mémoire tampon transcrit pour des données actionnables relatives à la commande vocale, dans lequel les données actionnables sont des données sur lesquelles il est possible d'agir conformément à la commande vocale ; et
déclencher (108) une action sur la base des données actionnables extraites et de la commandes vocale.

2. Procédé selon la revendication 1, comprenant en outre la surveillance continue de la parole dans le véhicule (204) par le au moins un microphone (412).

3. Procédé selon la revendication 2, dans lequel la détection d'une commande vocale dans un signal audio reçu par le au moins un microphone (412) comprend la reconnaissance d'un déclencheur, et dans lequel le déclencheur est une phrase d'éveil prononcée.

4. Procédé selon une quelconque des revendications précédentes, dans lequel la détection d'une commande vocale dans un signal audio reçu par le au moins un microphone (412) comprend la reconnaissance d'un déclencheur, et dans lequel le déclencheur est une activation de bouton.

5. Procédé selon une quelconque des revendications précédentes, dans lequel la détermination que la commande vocale concerne le contenu audio émis par le système d'infodivertissement du véhicule (502) comprend l'analyse de la commande vocale pour interpréter la commande.

6. Procédé selon la revendication 5, dans lequel la détermination que la commande vocale concerne la sortie de contenu audio par le système d'infodivertissement de véhicule (502) comprend en outre la mise en correspondance de la commande vocale interprétée avec une ou plusieurs commandes d'un ensemble de commandes.

7. Procédé selon une quelconque des revendications précédentes, dans lequel les données exploitables extraites sont un ou plusieurs éléments parmi : un numéro de téléphone, une adresse, un clip audio, des métadonnées concernant le contenu audio, une URL, des informations relatives à un événement, une adresse e-mail ou un terme de recherche.

8. Procédé selon la revendication 7, dans lequel le déclenchement d'une action comprend un ou plusieurs parmi : le transfert du numéro de téléphone vers une application de numérotation, le transfert du numéro de téléphone vers une application de messagerie, le transfert de l'adresse vers une application de cartographie/navigation, le transfert de l'audio clip vers une application de base de données, le transfert des métadonnées vers une application de base de données, le transfert de l'URL vers une application de navigateur, le transfert des informations d'événement vers une application de calendrier, le transfert de l'adresse e-mail vers une application de messagerie ou le transfert du terme de recherche vers un moteur de recherche.

9. Système d'enregistrement et d'action intelligent, IRAS, pour déclencher une action basée sur un contenu lu par un système d'infodivertissement de véhicule (502) dans un véhicule (204), le système comprenant :
au moins un microphone (412) pour détecter (102) une commande vocale reçue dans un signal audio ;
un module pour déterminer (104) que la commande vocale concerne le contenu audio émis par le système d'infodivertissement du véhicule (502) ;
un module (404) pour analyser (106) le contenu audio de sortie mis en mémoire tampon du système d'infodivertissement du véhicule (502) pour extraire, du contenu audio de sortie mis en mémoire tampon, des données relatives à la commande vocale, dans lequel l'analyse (106) du contenu audio de sortie mis en mémoire tampon du système d'infodivertissement du véhicule (502) pour extraire, à partir du contenu audio de sortie mis en mémoire tampon, des données relatives à la commande vocale comprend de transcrire le contenu audio de sortie mis en mémoire tampon et rechercher dans le contenu audio de sortie mis en mémoire tampon transcrit des données actionnables relatives à la commande vocale, dans lequel les données actionnables sont des données sur lesquelles il est possible d'agir conformément à la commande vocale ; et
un module (408) pour déclencher (108) une action basée sur les données actionnables extraites et la commande vocale.

10. Système selon la revendication 9, dans lequel le au moins un microphone (412) surveille en continu la parole dans le véhicule (204).

11. Système selon la revendication 9 ou 10, dans lequel la détection d'une commande vocale reçue dans un signal audio par le au moins un microphone (412) comprend la reconnaissance d'un déclencheur, et dans lequel le déclencheur est une activation de bouton.

12. Système selon une quelconque des revendications 9 à 11, dans lequel la détermination que la commande vocale concerne le contenu audio émis par le système d'infodivertissement du véhicule (502) comprend l'analyse de la commande vocale pour interpréter la commande.

13. Système selon une quelconque des revendications 9 à 12, dans lequel le déclenchement (108) d'une action comprend une ou plusieurs parmi : le transfert d'un numéro de téléphone vers une application de numérotation, le transfert d'un numéro de téléphone vers une application de messagerie, le transfert d'une adresse vers une application de cartographie/navigation, le transfert d'un clip audio vers une application de base de données application, transfert de métadonnées vers une application de base de données, le transfert d'une URL vers une application de navigateur, le transfert des informations d'événement vers une application de calendrier, le transfert d'une adresse e-mail vers une application de messagerie ou le transfert d'un terme de recherche vers un moteur de recherche.

14. Support de mémorisation non transitoire lisible par ordinateur mémorisant des instructions exécutables par processeur pour déclencher une action basée sur un contenu lu par un système d'infodivertissement de véhicule (502) dans un véhicule (204), dans lequel les instructions exécutables par processeur, lorsqu'elles sont exécutées par un processeur, amènent le processeur à exécuter le procédé selon une quelconque des revendications 1 à 8.
